# FASCICULE DE BREVET EUROPEEN

(11) **EP 0 797 284 B1**
(45) Date de publication et mention de la délivrance du brevet: **30.08.2000**
(21) Numéro de dépôt: 97400557.1
(22) Date de dépôt: 13.03.1997
(51) Int. Cl.: H02K 1/24

(54) **Rotor magnétoélectrique à griffes, procédé de fabrication d'un tel rotor**
Magnetoelektrischer Läufer mit Klauenpolen und Verfahren zum Herstellen eines solchen Läufers
Magnetoelectric rotor with claw-type poles and method for producing such rotor

(30) Priorité: 22.03.1996 FR 9603605
(43) Date de publication de la demande: 24.09.1997
(73) Titulaire: GEC ALSTHOM MOTEURS SA, 54062 Nancy (FR)
(72) Inventeur: Gueraud, Alain, 54280 Seichamps (FR); Mercier, Jean-Charles, 54710 Ludres (FR)
(74) Mandataire: Gosse, Michel

(56) Documents cités:
- US-A- 3 321 652
- US-A- 3 571 639
- PATENT ABSTRACTS OF JAPAN vol. 017, no. 473 (E-1423), 27 Août 1993 & JP 05 111201 A (TOSHIBA CORP), 30 Avril 1993,

## Description

L"invention concerne un rotor magnétoélectrique à griffes, et un procédé pour fabriquer un tel rotor. Plus particulièrement, l'invention concerne un rotor magnétoélectrique destiné à être utilisé dans une machine synchrone rapide, et un procédé de fabrication d'un tel rotor magnétoélectrique à griffes.

Ces rotors à griffes sont constitués d'une pluralité d'éléments amagnétiques et magnétiques solidarisés. Les vitesses qui peuvent être mises en jeu dans certaines machines synchrones rapides peuvent être égales ou supérieures à 50 000 t/mn. Or, comme indiqué ci-dessus, ces rotors sont des assemblages de pièces, de ce fait les constructeurs de rotor à griffes cherchent à obtenir des rotors ayant une résistance à l'éclatement centrifuge la plus élevée possible, tout en conservant un profil aérodynamique optimal.

Le document US-A-3321652 décrit un rotor magnétoélectrique à griffes du type comprenant deux pièces monopôle en matériau magnétique formant chacune un pôle de polarité opposée l'un par rapport à l'autre, et une pièce en matériau amagnétique séparant les pôles, chaque pièce monopôle comprenant un moyeu de révolution présentant une extrémité libre et un pôle en biseau comprenant une face oblique, les deux pièces monopôle en matériau magnétique étant disposées sur le même axe, faces obliques en regard, la pièce amagnétique étant disposée entre les faces obliques en regard et ayant une forme complémentaire des deux pièces en matériau magnétique de sorte que l'ensemble des pièces en matériau magnétique ou amagnétique constitue un cylindre de révolution plein.

La présente invention propose un rotor magnétoélectrique du même type mais présentant une meilleure tenue mécanique aux grandes vitesses de rotation.

Ainsi l'invention a pour objet un rotor magnétoélectrique tel que décrit ci-dessus, caractérisé en ce que l'ensemble est confiné dans un cylindre carter creux de révolution en matériau amagnétique ayant un rayon intérieur sensiblement égal au rayon dudit moyeu de révolution de chaque pièce en matériau magnétique, chaque pôle en biseau comprenant une face longitudinale de même rayon que le moyeu, ladite face oblique, transversale, formant le biseau avec ladite face longitudinale, deux faces latérales planes symétriques par rapport au plan de symétrie du pôle, convergentes l'une vers l'autre de la face longitudinale vers la face oblique, lesdites faces latérales planes formant avec le moyeu des épaulements transversaux, ledit cylindre carter creux ayant deux fenêtres traversantes, chacune en regard de la face longitudinale de l'une des pièces en matériau magnétique, chaque fenêtre étant occupée par un élément de tube distal en matériau magnétique de même polarité que la pièce en matériau magnétique à laquelle il est associé.

L'invention a aussi pour objet un rotor magnétoélectrique à griffes du type comprenant des pièces en matériau magnétique formant les pôles du rotor, et des pièces en matériau amagnétique de séparation des pôles de polarités opposées, deux desdites pièces en matériau magnétique étant des pièces d'extrémité monopôle en matériau magnétique de polarités opposées, chaque pièce monopôle comprenant un moyeu de révolution présentant une extrémité libre et un pôle en biseau comportant une face oblique, les deux pièces monopôle en matériau magnétique étant disposées sur le même axe, faces obliques en regard, caractérisé en ce qu'il comprend en outre, au moins une pièce intermédiaire en matériau magnétique, le pôle en biseau de chaque pièce monopôle comprenant une face longitudinale de même rayon que le moyeu, ladite face oblique, transversale, formant le biseau avec ladite face longitudinale, deux faces latérales planes symétriques par rapport au plan de symétrie du pôle, convergentes l'une vers l'autre de la face longitudinale vers la face oblique, lesdites faces latérales planes formant avec le moyeu des épaulements transversaux, la ou les pièces intermédiaire(s) comprenant chacune deux pôles de polarités opposées, ayant la même forme que les pôles des pièces d'extrémité, chacun ayant une face oblique en regard de la face oblique du pôle d'une des pièces magnétiques d'extrémité ou de la face oblique de l'un des pôles d'une pièce intermédiaire, chaque pôle étant séparé du pôle en regard par une pièce amagnétique de forme complémentaire des deux pôles, de sorte que l'ensemble des pièces d'extrémité, de la ou des pièces intermédiaire(s) et des pièces en matériau amagnétique constitue un cylindre de révolution plein, et en ce que l'ensemble est confiné dans un cylindre carter creux de révolution en matériau amagnétique ayant un rayon intérieur sensiblement égal au rayon dudit cylindre de révolution plein, ledit cylindre carter ayant autant de fenêtres traversantes qu'il y a de pôles, chaque fenêtre étant en regard de la face longitudinale de l'un des pôles en matériau magnétique, chaque fenêtre étant occupée par un élément de tube distal en matériau magnétique de même polarité que le pôle auquel il est associé.

Les fenêtres traversantes ont, avantageusement, en coupe transversale, une forme générale convergente de l'intérieur vers l'extérieur du cylindre carter lesdits éléments de tube distaux ayant un rayon et une épaisseur radiale sensiblement égaux au rayon et à l'épaisseur radiale du cylindre carter et présentant des bords latéraux complémentaires de la forme convergente des fenêtres.

Les épaulements transversaux des rotors selon l'invention forment un angle avec le plan perpendiculaire à l'axe des rotors.

Chaque pièce en matériau magnétique ou amagnétique est constituée d'une pluralité d'éléments de tube ajustés et coaxiaux solidarisés les uns avec les autres.

Dans un mode de réalisation, chaque pièce en matériau magnétique ou amagnétique comprend un élément de tube plein central tangent aux faces latérales planes symétriques, et un élément de tube creux de rayon intérieur sensiblement égal au rayon de l'élément de tube plein et de rayon extérieur sensiblement égal au rayon intérieur du cylindre carter .

L'invention concerne enfin un procédé de fabrication de rotors magnétoélectriques à griffes décris ci-dessus. Selon ce procédé, on remplit le cylindre creux avec les éléments de tube ajustés et coaxiaux, et on compresse isostatiquement l'ensemble des éléments de tube et du cylindre carter creux.

Les dits éléments de tube distaux sont les premiers des éléments de tube positionnés dans ledit cylindre carter lors de l'étape de remplissage.

Le procédé peut comprendre avantageusement une étape de finition consistant, par exemple, à creuser axialement le rotor ou donner une forme particulière à la face externe du rotor.

L'un des avantages de la présente invention résulte de la forme des pièces constitutives du rotor permettant la réalisation d'une étape de compression isostatique en diminuant les risques quant à la qualité du résultat.

Un autre avantage de la présente invention est la possibilité de s'affranchir de la forme complexe des pièces constitutives du rotor en fabriquant une pluralité d'éléments de tube facilement usinables et de réunir ces éléments de tube pour fabriquer la pièce complexe.

Un autre avantage de la présente invention résulte du principe gigogne des tubes qui assure une meilleure tenue à l'éclatement centrifuge du rotor.

D'autres avantages et caractéristiques de la présente invention résulteront de la description qui va suivre en référence aux dessins annexés dans lesquels :

La figure 1A est une vue schématique d'une pièce magnétique d'extrémité d'un rotor selon l'invention.

Les figures 1B, 1C sont des vues schématiques respectivement du dessus et transversale de la vue de la figure 1A.

La figure 2A est une vue schématique d'une pièce amagnétique d'un rotor selon l'invention.

Les figures 2B, 2C sont des vues schématiques respectivement du dessus et transversale de la vue de la figure 2A.

La figure 3A est une vue schématique d'une pièce magnétique intermédiaire d'un rotor selon l'invention.

Les figures 3B, 3C sont des vues schématiques respectivement du dessus et transversale de la vue de la figure 3A.

La figure 4 est une vue schématique éclatée d'un rotor selon l'invention.

La figure 5A est une vue schématique d'un rotor assemblé selon l'invention.

Les figures 5B, 5C, 5D sont des vues schématiques respectivement des coupes B, C, D de la vue de la figure 5A.

La figure 6 est une vue schématique d'un rotor selon l'invention après l'étape finale d'usinage.

Dans la description qui va suivre les termes "longitudinal" et "latéral" concernent des éléments de surfaces qui n'ont pas d'intersection avec l'axe de la pièce considérée ou du rotor.

L'invention concerne un rotor magnétoélectrique à griffes du type comprenant des pièces en matériau magnétique 1, 9 formant les pôles 3 du rotor, et des pièces en matériau amagnétique 12 de séparation des pôles 3 de polarité opposée, confinés dans un cylindre carter creux 13 de révolution en matériau amagnétique fabriqué selon le procédé décrit ci-dessus.

Dans un premier mode de réalisation, le rotor est un rotor bipolaire comprenant deux pièces 1 d'extrémité mono pôle en matériau magnétique, de polarité opposée, et une pièce en matériau amagnétique 12.

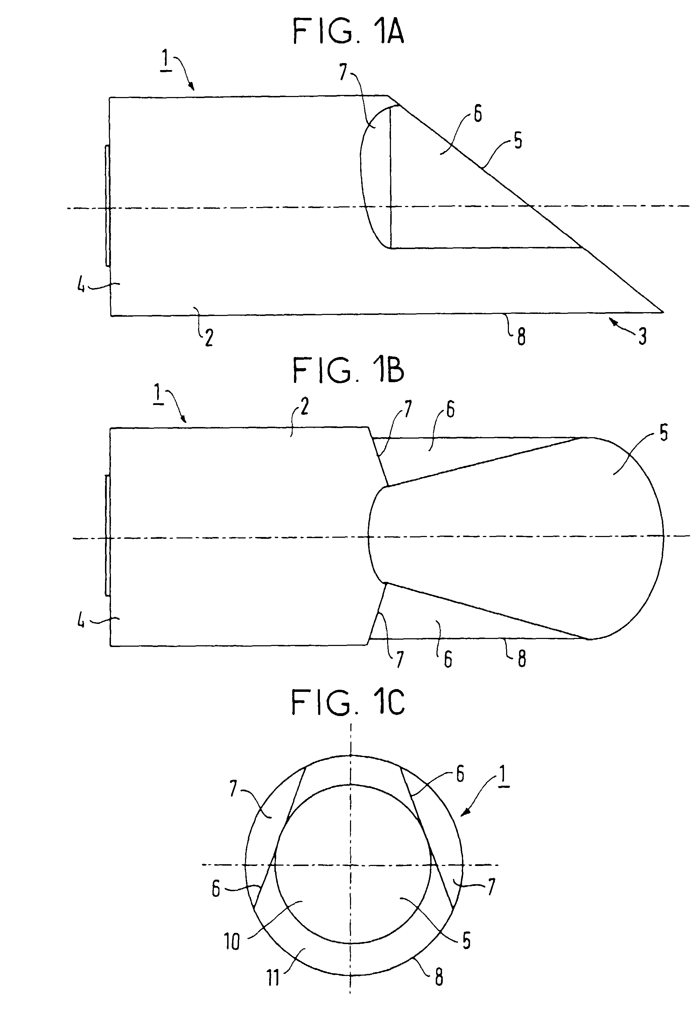

Chaque pièce 1 mono pôle (Figs. 1A, 1B, 1C) comprend un moyeu de révolution 2 ayant un rayon sensiblement égal au rayon intérieur du cylindre carter 13, et présentant une extrémité libre 4 et un pôle 3 en biseau. Le pôle 3 en biseau comprenant une face longitudinale 8 de même rayon que le moyeu 2, une face transversale oblique 5 formant le biseau avec la face longitudinale 8, et deux faces latérales 6 planes, symétriques par rapport au plan de symétrie du pôle 3 en biseau, convergeant l'une vers l'autre, de la face longitudinale 8 vers la face oblique 5.

Les faces latérales planes 6 forment avec le moyeu des épaulements 7 transversaux.

Les deux pièces 1 en matériau magnétique sont disposées sur le même axe, leur face oblique 5 en regard.

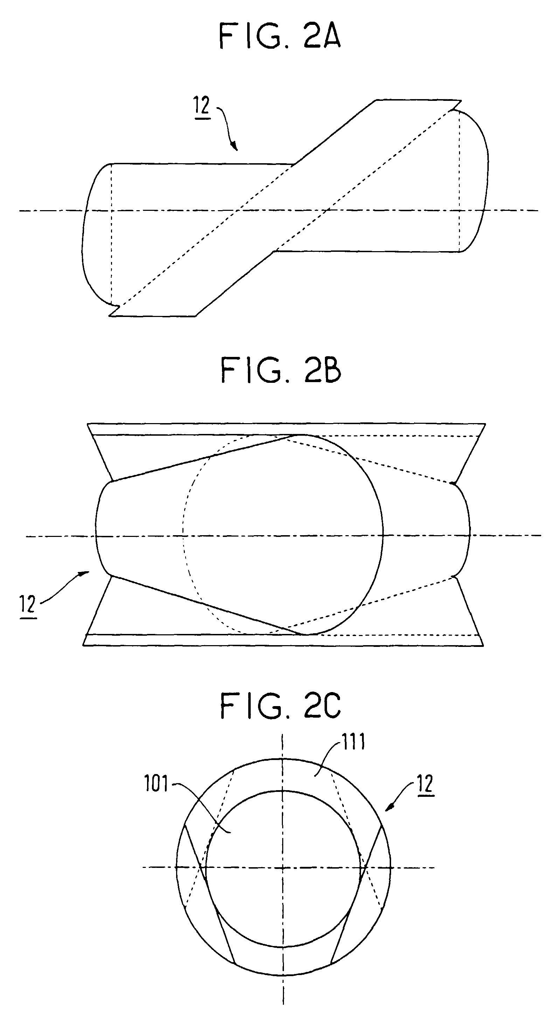

La pièce amagnétique 12 (Figs. 2A, 2B, 2C) est disposée entre les faces obliques 5 en regard, et a une forme complémentaire des deux pièces 1 en matériau macnétique de sorte que l'ensemble des pièces en matériaux magnétique 1 ou amagnétique 12 constitue un cylindre de révolution plein de rayon sensiblement égal au rayon intérieur du cylindre de révolution carter 13 amagnétique.

Le cylindre carter 13 a deux fenêtres traversantes 15, chacune en regard de la face longitudinale 8 de l'une des pièces 1 en matériau magnétique, chaque fenêtre 15 étant occupée par un élément de tube distal 14 en matériau magnétique de même polarité que la pièce 1 en matériau magnétique à laquelle il est associé.

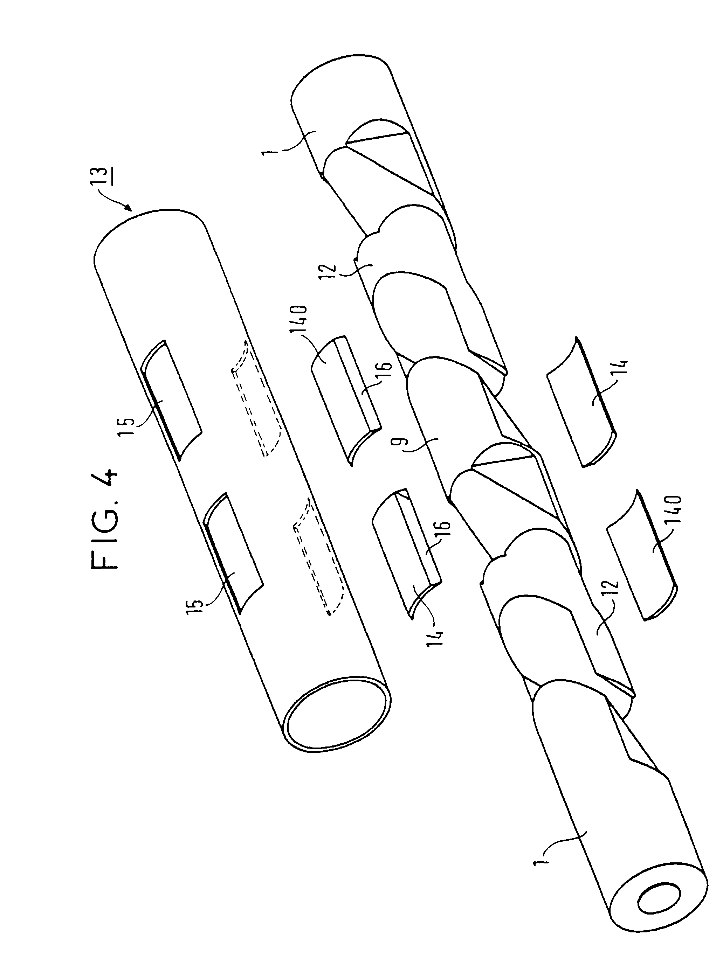

Dans un deuxième mode de réalisation (représenté sur les figures 4 à 6), le rotor comprend une succession axiale de rotors bipolaires.

Il comprend deux pièces d'extrémité 1 mono pôle en matériau magnétique, au moins une pièce intermédiaire 9 en matériau magnétique et des pièces 12 en matériau amagnétique. Les pièces d'extrémité 1 mono pôle sont toujours de polarités opposées.

Les pièces d'extrémité 1 sont de la même forme que celle décrite dans le premier mode de réalisation (Figs. 1A, 1B, 1C).

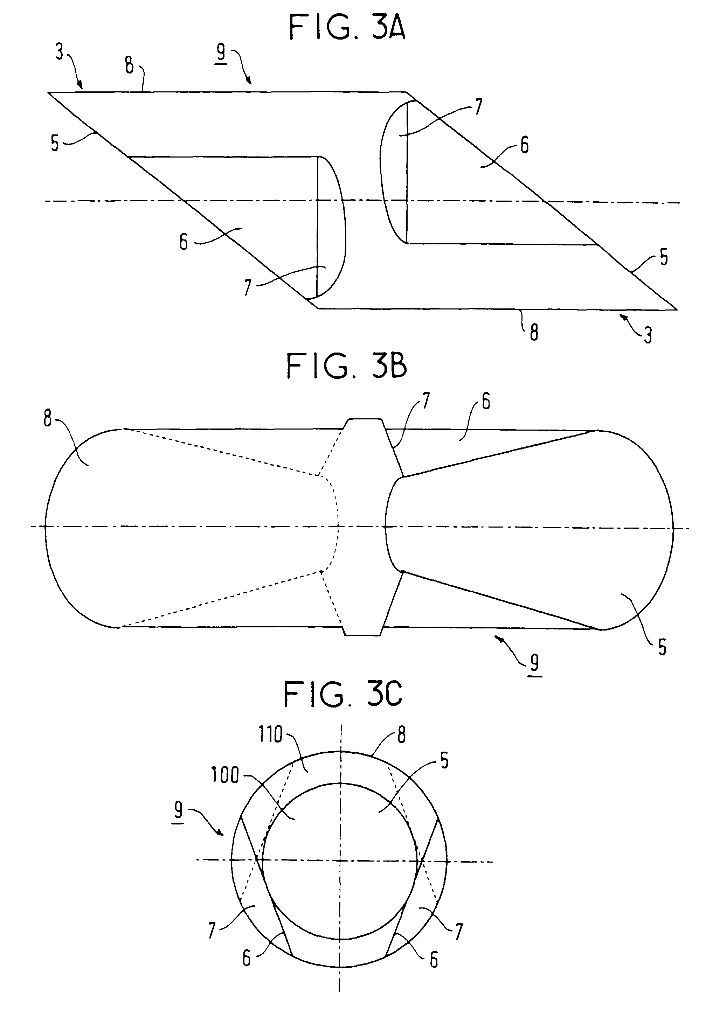

La (ou les) pièce(s) intermédiaire(s) 9 (Figs. 3A, 3B, 3C) comprend deux pôles 30 de polarités opposées, ayant la même forme que les pôles 3 des pièces d'extrémité 1.

Chaque pôle 30 d'une pièce intermédiaire 9 a une face oblique 50 en regard de la face oblique 5 du pôle 3 d'une des pièces magnétiques d'extrémité 1 ou de la face oblique 50 l'un des pôles 30 d'une autre pièce intermédiaire 9.

Chaque pôle 3, 30 est séparé du pôle 30, 3 en regard par une pièce amagnétique 12 (Figs. 2A, 2B, 2C) de forme complémentaire des deux pôles 3, 30 de sorte que l'ensemble des pièces d'extrémité 1, de la (ou des) pièce(s) intermédiaire(s) 9, et des pièces en matériau amagnétique 12 constitue un cylindre de révolution plein de rayon sensiblement égal au rayon intérieur du cylindre de révolution carter 13 amagnétique.

Comme dans le premier mode de réalisation, le cylindre carter 13 a autant de fenêtres traversantes 15 que de pôles 3.

Chaque fenêtre 15 est en regard de la face longitudinale 8 de l'un des pôles 3 en matériau magnétique, chaque fenêtre est occupée par un élément de tube distal 14, 140 en matériau magnétique de même polarité que le pôle 3 auquel il est associé (Figs. 4).

Dans les deux modes de réalisation, les fenêtres traversantes 15 ont, en coupe transversale, une forme générale convergente de l'intérieur vers l'extérieur du cylindre carter 13, et les éléments de tube distaux 14, 140 ayant un rayon et une épaisseur radiale sensiblement égaux au rayon et à l'épaisseur radiale du cylindre carter 13, présentent des bords latéraux 16 complémentaires de la forme convergente des fenêtres 15.

Avantageusement, les épaulements transversaux 7 forment un angle avec le plan perpendiculaire à l'axe du rotor. Préférentiellement l'angle est de 45°.

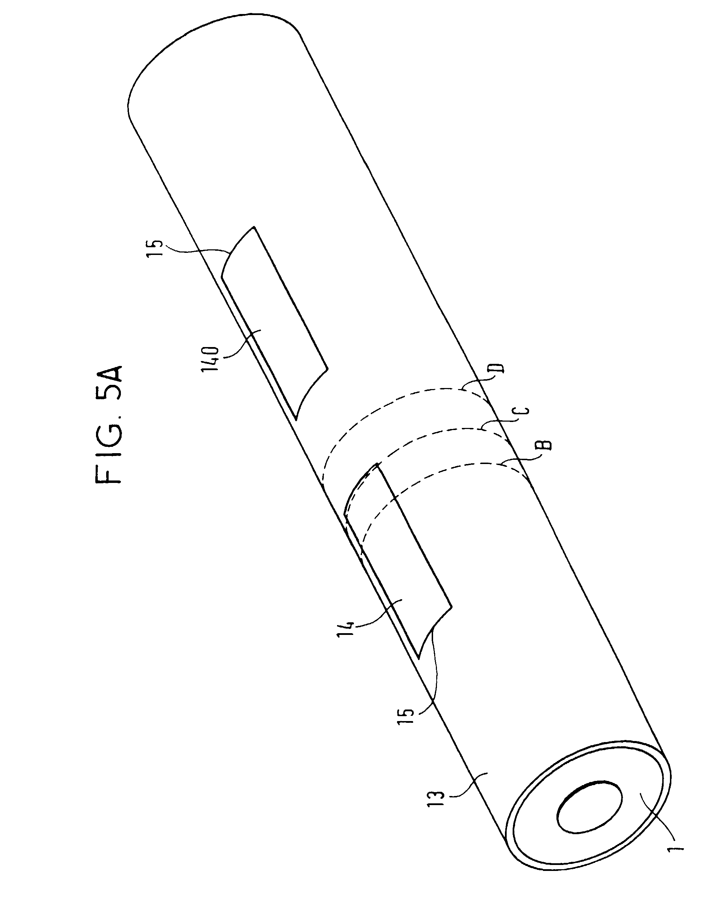

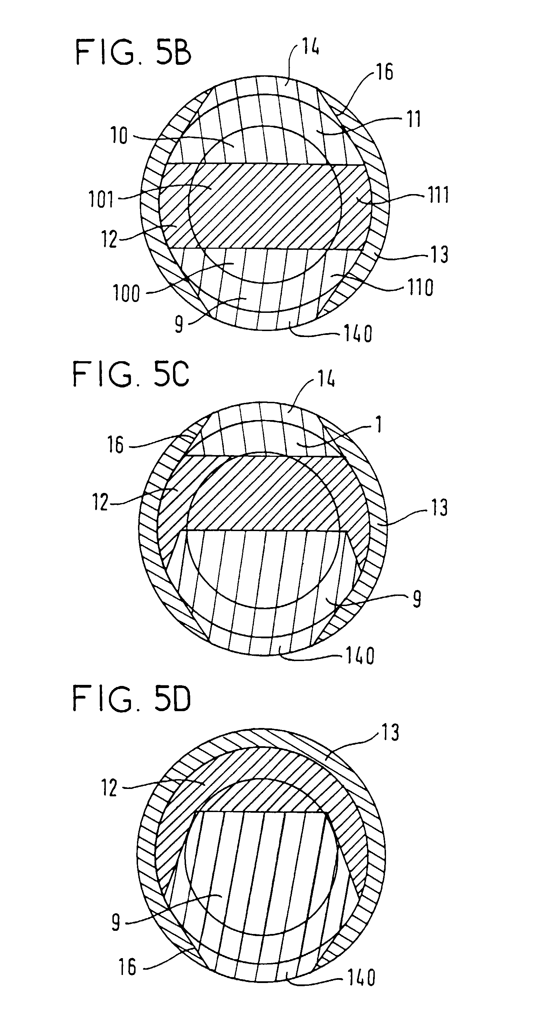

Dans le mode de réalisation représenté, les pièces en matériau magnétique 1, 9 ou amagnétique 12 comprennent un élément de tube plein central 10, 100, 101 tangent aux faces latérales planes symétriques 6, et un élément de tube creux 11, 110, 111 de rayon intérieur sensiblement égal au rayon de l'élément de tube plein 10 et de rayon extérieur sensiblement égal au rayon intérieur du cylindre carter 13. En outre comme mentionné précédemment, les pièces en matériau magnétique comprennent un élément de tube distal 14, 140 par pôle 3, 30 ayant un diamètre intérieur, et un diamètre extérieur sensiblement égaux a ceux du cylindre carter 13. Sur les Figures 5B, 5C, 5D, chaque pièce est hachurée de façon différente indépendamment des éléments de tube qui la constituent.

Ces éléments de tube distaux 14, 140, de par la forme de leurs bords latéraux 16, permettent de constituer un entrefer progressif pour chaque pôle 3, 30 du rotor.

L'invention concerne aussi un procédé de fabrication des rotors magnétoélectriques à griffes décris ci-dessus

Une des étapes caractéristiques du procédé selon l'invention consiste en ce que chaque pièce en matériau magnétique 1, 9 ou amagnétique 12 est réalisée à partir d'éléments de tube gigognes 10, 11, 14 , 100, 110, 140, 101, 111 indépendants ajustés et coaxiaux, chaque élément de tube 10, 11, 14, 100, 110, 140, 101, 111 ayant des bords latéraux, des extrémités transversales et une face latérale présentant la forme extérieure de l'épaisseur radiale correspondante de la pièce en matériau magnétique 1, 9 ou amagnétique 12 concernée.

Dans une mise en oeuvre du procédé selon l'invention les éléments de tube distaux 14, 140 sont les premiers des éléments de tube 10, 11, 14, 100, 110, 140, 101, 111 positionnés dans ledit cylindre carter 13 lors de l'étape de remplissage.

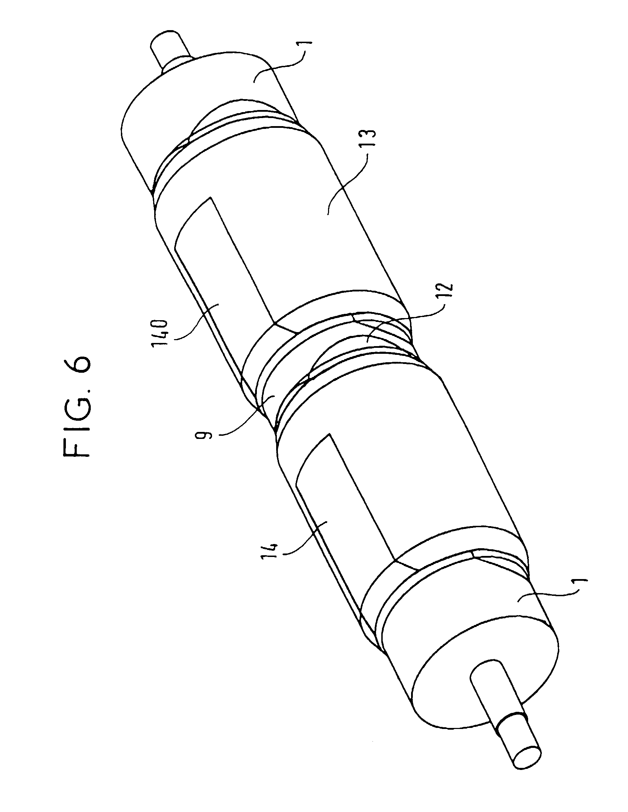

Selon le procédé de l'invention, à l'issue de l'étape de compression isostatique, le rotor résultant peut subir une étape de finition. Cette étape de finition peut par exemple consister à creuser axialement le rotor pour l'alléger ou donner une forme particulière à la face externe du rotor (Fig. 6).

En particulier, on pourra, sans sortir du cadre de l'invention, faire varier le nombre d'éléments de tube constitutifs de chaque pièce sans sortir du cadre de la présente invention.

## Revendications

1. Rotor magnétoélectrique à griffes du type comprenant deux pièces (1) monopôle en matériau magnétique formant chacune un pôle (3), de polarités opposées l'un par rapport à l'autre, et une pièce (12) en matériau amagnétique séparant les pôles (3), chaque pièce (1) monopôle comprenant un moyeu de révolution (2) présentant une extrémité libre (4) et un pôle (3) en biseau comprenant une face oblique (5), les deux pièces (1) monopôle en matériau magnétique étant disposées sur le même axe, faces obliques (5) en regard, la pièce amagnétique (12) étant disposée entre les faces obliques (5) en regard et ayant une forme complémentaire des deux pièces (1) en matériau magnétique de sorte que l'ensemble des pièces (1, 12) en matériau magnétique ou amagnétique constitue un cylindre de révolution plein, caractérisé en ce que l'ensemble est confiné dans un cylindre carter creux (13) de révolution en matériau amagnétique ayant un rayon intérieur sensiblement égal au rayon dudit moyeu de révolution (2) de chaque pièce (1) en matériau magnétique, chaque pôle (3) en biseau comprenant une face longitudinale (8) de même rayon que le moyen (2), ladite face oblique (5), transversale, formant le biseau avec ladite face longitudinale (8), deux faces latérales planes (6) symétriques par rapport au plan de symétrie du pôle (3), convergentes l'une vers l'autre de la face longitudinale (8) vers la face oblique (5), lesdites faces latérales planes (6) formant avec le moyeu (2) des épaulements transversaux (7), ledit cylindre carter creux (13) ayant deux fenêtres traversantes (15), chacune en regard de la face longitudinale (8) de l'une des pièces (1) en matériau magnétique, chaque fenêtre étant occupée par un élément de tube distal (14) en matériau magnétique de même polarité que la pièce en matériau magnétique à laquelle est il est associé.

2. Rotor magnétoélectrique à griffes du type comprenant des pièces en matériau magnétique (1, 9) formant les pôles (3, 30) du rotor, et des pièces en matériau amagnétique (12) de séparation des pôles (3, 30) de polarités opposées, deux desdites pièces en matériau magnétique étant des pièces d'extrémité (1) monopôle en matériau magnétique de polarités opposées, chaque pièce (1) monopôle comprenant un moyeu de révolution (2) présentant une extrémité libre (4) et un pôle (3) en biseau comportant une face oblique (5), les deux pièces monopôle (1) en matériau magnétique étant disposées sur le même axe, faces obliques (5) en regard, caractérisé en ce qu'il comprend en outre au moins une pièce intermédiaire (9) en matériau magnétique, le pôle (3) en biseau de chaque pièce (1) monopôle comprenant une face longitudinale (8) de même rayon que le moyeu (2), ladite face oblique (5), transversale, formant le biseau avec ladite face longitudinale (8), deux faces latérales planes (6) symétriques par rapport au plan de symétrie du pôle (3), convergentes l'une vers l'autre de la face longitudinale (8) vers la face oblique (5), lesdites faces latérales planes (6) formant avec le moyeu (2) des épaulements transversaux (7), la ou les pièces intermédiaire(s) (9) comprenant chacune deux pôles (30) de polarités opposées, ayant la même forme que les pôles (3) des pièces d'extrémité (1), chacun ayant une face oblique (50) en regard de la face oblique (5) du pôle (3) d'une des pièces magnétiques d'extrémité ou de la face oblique (50) de l'un des pôles (30) d'une pièce (9) intermédiaire, chaque pôle (3, 30) étant séparé du pôle (30, 3) en regard par une pièce amagnétique (12) de forme complémentaire des deux pôles (3, 30), de sorte que l'ensemble des pièces d'extrémité (1), de la ou des pièces intermédiaire(s) (9) et des pièces en matériau amagnétique (12) constitue un cylindre de révolution plein, et en ce que l'ensemble est confiné dans un cylindre carter creux (13) de révolution en matériau amagnétique ayant un rayon intérieur sensiblement égal au rayon dudit cylindre de révolution plein, ledit cylindre carter (13) ayant autant de fenêtres traversantes (15) qu'il y a de pôles (3, 30), chaque fenêtre (15) étant en regard de la face longitudinale (8) de l'un des pôles (3, 30) en matériau magnétique, chaque fenêtre (15) étant occupée par un élément de tube distal (14, 140) en matériau magnétique de même polarité que le pôle (3, 30) auquel il est associé.

3. Rotor magnétoélectrique selon la revendication 1 ou 2 caractérisé en ce que les fenêtres traversantes (15) ont, en coupe transversale, une forme générale convergente de l'intérieur vers l'extérieur du cylindre carter (13), lesdits éléments de tube distaux (14, 140) ayant un rayon et une épaisseur radiale sensiblement égaux au rayon et à l'épaisseur radiale du cylindre carter (13), et présentant des bords latéraux (16) complémentaires de la forme convergente des fenêtres (15).

4. Rotor magnétoélectrique selon l'une quelconque des revendications 1 à 3 caractérisé en ce que les épaulements transversaux (7) forment un angle avec le plan perpendiculaire de l'axe du rotor.

5. Rotor magnétoélectrique selon l'une quelconque des revendications 1 à 4 caractérisé en ce que chaque pièce en matériau magnétique (1, 9) ou amagnétique (12) est constituée d'une pluralité d'éléments de tube (14, 10, 11 ; 110, 100 ; 140, 111, 101) ajustés et coaxiaux solidarisé les uns avec les autres.

6. Rotor magnétoélectrique selon la revendication 5 caractérisé en ce que chaque pièce en matériau magnétique (1, 9) ou amagnétique (12) comprend un élément de tube plein central (10, 100, 101) tangent aux faces latérales planes (6) symétriques, et un élément de tube creux (11, 110, 111) de rayon intérieur sensiblement égal au rayon de l'élément de tube plein (10, 100, 101) et de rayon extérieur sensiblement égal au rayon intérieur du cylindre carter (13).

7. Procédé de fabrication d'un rotor magnétoélectrique à griffes selon la revendication 5 ou 6, caractérisé en ce que l'on remplit le cylindre creux (13) avec les éléments de tube (14, 10, 11, 110, 100, 140, 111, 101) ajustés et coaxiaux, et on compresse isostatiquement l'ensemble des éléments de tube (14, 10, 11, 110, 100, 140, 111,101) et du cylindre carter creux (13).

8. Procédé de fabrication selon la revendication 7 caractérisé en ce que lesdits éléments de tube distaux (14, 140) sont les premiers des éléments de tube (14, 10, 11, 110, 100, 140, 111, 101) positionnés dans ledit cylindre carter (13) lors de l'étape de remplissage.

9. Procédé de fabrication selon la revendication 7 ou 8 caractérisé en ce qu'il comprend une étape de finition consistant à creuser axialement le rotor ou donner une forme particulière à la face externe du rotor.

## Patentansprüche

1. Magnetoelektrischer Läufer mit Klauenpolen des Typs, der zwei Monopolteile (1) aus magnetischem Material, die jeweils einen Pol (3) mit in bezug aufeinander entgegengesetzten Polaritäten bilden, und ein Teil (12) aus nichtmagnetischem Material umfasst, das die Pole (3) trennt, wobei jedes Monopolteil (1) eine Rotationsnabe (2), die ein freies Ende (4) aufweist, und einen abgeschrägten Pol (3) umfasst, der eine Schrägfläche (5) umfasst, wobei die beiden Monopolteile (1) aus magnetischem Material auf derselben Achse angeordnet sind, wobei die Schrägflächen (5) einander gegenüberstehen, wobei das nichtmagnetische Teil (12) zwischen den einander gegenüberstehenden Schrägflächen (5) angeordnet ist und eine zu den beiden Teilen (1) aus magnetischem Material komplementäre Form hat, so dass die Einheit aus den Teilen (1, 12) aus magnetischem oder nichtmagnetischem Material einen massiven Rotationszylinder bildet, dadurch gekennzeichnet, dass die Einheit in einem hohlen Gehäuse-Rotationszylinder (13) aus nichtmagnetischem Material mit einem Innenradius im Wesentlichen gleich dem Radius der Rotationsnabe (2) jedes Teils (1) aus magnetischem Material eingeschlossen ist, wobei jeder abgeschrägte Pol (3) eine Längsfläche (8) mit dem gleichen Radius wie die Nabe (2), die mit der Längsfläche (8) die Abschrägung bildende, quer verlaufende Schrägfläche(5), zwei in bezug auf die Symmetrieebene des Pols (3) symmetrische, ebene Seitenflächen (6) umfasst, die von der Längsfläche (8) zur Schrägfläche (5) hin zueinander konvergent sind, wobei die ebenen Seitenflächen (6) mit der Nabe (2) quer verlaufende Schultern (7) bilden, wobei der hohle Gehäusezylinder (13) zwei quer verlaufende Fenster (15) aufweist, die jeweils der Längsfläche (8) eines der Teile (1) aus magnetischem Material gegenüberstehen, wobei jedes Fenster von einem fernen Röhrenelement (14) aus magnetischem Material mit der gleichen Polarität wie das Teil aus magnetischem Material, zu welchem es gehört, eingenommen wird.

2. Magnetoelektrischer Läufer mit Klauenpolen des Typs, der Teile (1, 9) aus magnetischem Material, die die Pole (3, 30) des Läufers bilden, und Teile (12) aus nichtmagnetischem Material zur Trennung der Pole (3, 30) mit entgegengesetzten Polaritäten umfasst, wobei zwei der Teile aus magnetischem Material Monopolendteile (1) aus magnetischem Material mit entgegengesetzten Polaritäten sind, wobei jedes Monopolteil (1) eine Rotationsnabe (2), die ein freies Ende (4) aufweist, und einen abgeschrägten Pol (3) umfasst, der eine Schrägfläche (5) umfasst, wobei die beiden Monopolteile (1) aus magnetischem Material auf derselben Achse angeordnet sind, wobei die Schrägflächen (5) einander gegenüberstehen, dadurch gekennzeichnet, dass er außerdem wenigstens ein Zwischenteil (9) aus magnetischem Material umfasst, wobei der abgeschrägte Pol (3) jedes Monopolteils (1) eine Längsfläche (8) mit dem gleichen Radius wie die Nabe (2), die mit der Längsfläche (8) die Abschrägung bildende, quer verlaufende Schrägfläche (5), zwei in bezug auf die Symmetrieebene des Pols (3) symmetrische, ebene Seitenflächen (6) umfasst, die von der Längsfläche (8) zur Schrägfläche (5) hin zueinander konvergent sind, wobei die ebenen Seitenflächen (6) mit der Nabe (2) quer verlaufende Schultern (7) bilden, wobei das oder die Zwischenteil(e) (9) jeweils zwei Pole (30) mit entgegengesetzten Polaritäten umfasst (umfassen), die die gleiche Form wie die Pole (3) der Endteile (1) aufweisen, wobei jeder eine Schrägfläche (50) gegenüber der Schrägfläche (5) des Pols (3) eines der magnetischen Endteile oder der Schrägfläche (50) eines der Pole (30) eines Zwischenteils (9) aufweist, wobei jeder Pol (3, 30) vom gegenüberliegenden Pol (30, 3) durch ein nichtmagnetisches Teil (12) mit zu den beiden Polen (3, 30) komplementärer Form getrennt ist, so dass die Einheit aus den Endteilen (1), dem oder den Zwischenteil(en) (9) und den Teilen (12) aus nichtmagnetischem Material einen massiven Rotationszylinder bildet, und dass die Einheit in einem hohlen Gehäuse-Rotationszylinder (13) aus nichtmagnetischem Material mit einem Innenradius im Wesentlichen gleich dem Radius des massiven Rotationszylinders eingeschlossen ist, wobei der Gehäusezylinder (13) so viele hindurchgehende Fenster (15) aufweist, wie es Pole (3, 30) gibt, wobei jedes Fenster (15) der Längsfläche (8) eines der Pole (3, 30) aus magnetischem Material gegenübersteht, wobei jedes Fenster (15) von einem fernen Röhrenelement (14, 140) aus magnetischem Material mit der gleichen Polarität wie der Pol (3, 30), zu welchem es gehört, eingenommen wird.

3. Magnetoelektrischer Läufer nach Anspruch 1 oder 2, dadurch gekennzeichnet, dass die hindurchgehenden Fenster (15) im Querschnitt eine allgemeine Form haben, die vom Inneren zum Äußeren des Gehäusezylinders (13) hin konvergent ist, wobei die fernen Röhrenelemente (14, 140) einen Radius und eine radiale Dicke im Wesentlichen gleich dem Radius und der radialen Dicke des Gehäusezylinders (13) haben und zur konvergenten Form der Fenster (15) komplementäre Seitenränder (16) aufweisen.

4. Magnetoelektrischer Läufer nach einem der Ansprüche 1 bis 3, dadurch gekennzeichnet, dass die quer verlaufenden Schultern (7) mit der zur Achse des Läufers senkrechten Ebene einen Winkel bilden.

5. Magnetoelektrischer Läufer nach einem der Ansprüche 1 bis 4, dadurch gekennzeichnet, dass jedes Teil aus magnetischem (1, 9) oder nichtmagnetischem (12) Material aus einer Mehrzahl von angepassten und koaxialen Röhrenelementen (14, 10, 11; 110, 100; 140, 111, 101) besteht, die miteinander verbunden sind.

6. Magnetoelektrischer Läufer nach Anspruch 5, dadurch gekennzeichnet, dass jedes Teil aus magnetischem (1, 9) oder nichtmagnetischem (12) Material ein die symmetrischen ebenen Seitenflächen (6) tangierendes, zentrales, massives Röhrenelement (10, 100, 101) und ein hohles Röhrenelement (11, 110, 111) mit einem Innenradius im Wesentlichen gleich dem Radius des massiven Röhrenelements (10, 100, 101) und einem Außenradius im Wesentlichen gleich dem Innenradius des Gehäusezylinders (13) umfasst.

7. Verfahren zur Herstellung eines magnetoelektrischen Läufers mit Klauenpolen nach Anspruch 5 oder 6, dadurch gekennzeichnet, dass der hohle Zylinder (13) mit den angepassten und koaxialen Röhrenelementen (14, 10, 11, 110, 100, 140, 111, 101) gefüllt wird und die Einheit aus den Röhrenelementen (14, 10, 11, 110, 100, 140, 111, 101) und dem hohlen Gehäusezylinder (13) isostatisch komprimiert wird.

8. Herstellungsverfahren nach Anspruch 7, dadurch gekennzeichnet, dass die fernen Röhrenelemente (14, 140) die ersten der Röhrenelemente (14, 10, 11, 110, 100, 140, 111, 101) sind, die beim Füllschritt im Gehäusezylinder (13) angeordnet werden.

9. Herstellungsverfahren nach Anspruch 7 oder 8, dadurch gekennzeichnet, dass es einen Endschritt umfasst, der darin besteht, den Läufer axial auszuhöhlen oder der Außenfläche des Läufers eine besondere Form zu geben.

## Claims

1. A magnetoelectric claw rotor of the type comprising two single-pole parts (1) of magnetic material each forming a pole (3) having opposite polarity to the other, and a part (12) of non-magnetic material separating the poles (3), each single-pole part (1) having a circularly cylindrical hub (2) having a free end (4) and a chamfered pole (3) having a sloping face (5), the two single-pole parts (1) of magnetic material being disposed on the same axis, with their sloping faces (5) facing each other, the non-magnetic part (12) being disposed between the facing sloping faces (5), and being complementary in shape to the two magnetic material parts (1) such that the set of magnetic material parts (1) and the non-magnetic material part (12) constitutes a solid circular cylinder, the rotor being characterized in that the assembly is confined in a hollow cylindrical case (13) of non-magnetic material of inside radius substantially equal to the radius of said circularly cylindrical hub (2) of each part (1) of magnetic material, each chamfered pole (3) having a longitudinal face (8) of the same radius as the hub (2), said sloping transverse face (5) forming the chamfer relative to said longitudinal face (8), two plane lateral faces (6) disposed symmetrically about the plane of symmetry of the pole (3) converging towards each other going from the longitudinal face (8) towards the sloping face (5), transverse shoulders (7) being formed between the hub (2) and said plane lateral faces (6), said hollow cylindrical case (13) having two through windows (15) each facing a respective one of the longitudinal faces (8) of the magnetic material parts (1), each window being occupied by a distal tube element (14) of magnetic material having the same polarity as the magnetic material part with which it is associated.

2. A magnetoelectric claw rotor of the type comprising magnetic material parts (1, 9) forming the poles (3, 30) of the rotor, and non-magnetic material parts (12) for separating poles (3, 30) of opposite polarity, two of said parts of magnetic material being single-pole end parts (1) of magnetic material and of opposite polarity, each single-pole part (1) having a circularly cylindrical hub (2) having a free end (4) and a chamfered pole (3) having a sloping face (5), the two single-pole parts (1) of magnetic material being disposed on the same axis, with their sloping faces (5) facing each other, the rotor being characterized in that it further comprises at least one intermediate part (9) of magnetic material, the chamfered pole (3) of each single-pole part (1) having a longitudinal face (8) of the same radius as the hub (2), said sloping transverse face (5) forming the chamfer relative to said longitudinal face (8), two plane lateral faces (6) disposed symmetrically about the plane of symmetry of the pole (3) and converging towards each other going from the longitudinal face (8) towards the sloping face (5), transverse shoulders (7) being formed between the hub (2) and said plane lateral faces (6), the, or each, intermediate part (9) comprising two poles (30) of opposite polarity, of the same shape as the poles (3) of the end parts (1), each having a sloping face (50) facing the sloping face (5) of the pole (3) of one of the magnetic end parts or the sloping face (50) of one of the poles (30) of an intermediate part (9), each pole (3, 30) being separated from the facing pole (30, 3) by a non-magnetic part (12) of shape complementary to the two poles (3, 30) such that the set of end parts (1), of intermediate part(s) (9), and of parts (12) of non-magnetic material constitutes a solid circular cylinder, and in that the set is confined in a hollow cylindrical case (13) of non-magnetic material of inside radius substantially equal to the radius of said solid circular cylinder, said cylindrical case (13) having as many through windows (15) as there are poles (3, 30), each window (15) facing the longitudinal face (8) of a corresponding one of the magnetic material poles (3, 30), each window (15) being occupied by a distal tube element (14, 140) of magnetic material having the same polarity as the pole (3, 30) with which it is associated.

3. A magnetoelectric rotor according to claim 1 or 2, characterized in that in cross-section each through window (15) is of generally converging shape going from the inside towards the outside of the cylindrical case (13), said distal tube elements (14, 140) being of a radius and a radial thickness substantially equal to the radius and the radial thickness of the cylindrical case (13), and having lateral edges (16) that are complementary in shape to the converging shape of the windows (15).

4. A magnetoelectric rotor according to any one of claims 1 to 3, characterized in that the transverse shoulders (7) are at an angle relative to the plane perpendicular to the axis of the rotor.

5. A magnetoelectric rotor according to any one of claims 1 to 4, characterized in that each part of magnetic material (1, 9) or of non-magnetic material (12) is built up from a plurality of fitted coaxial cylindrical elements (14,10,11; 110,100; 140, 111, 101) that are assembled to one another.

6. A magnetoelectric rotor according to claim 5, characterized in that each part of magnetic material (1, 9) or of non-magnetic material (12) comprises a central solid cylindrical element (10, 100, 101) tangential to the symmetrical plane lateral faces (6), and a hollow tubular element (11, 110, 111) of inside radius substantially equal to the radius of the solid cylindrical element (10, 100, 101) and of outside radius substantially equal to the inside radius of the cylindrical case (13).

7. A method of manufacturing a magnetoelectric claw rotor according to claim 5 or 6, characterized in that the cylindrical case (13) is filled with the fitted and coaxial cylindrical elements (14, 10, 11, 110, 140, 111, 101), and the assembly of cylindrical elements (14, 10, 11, 110, 140, 111, 101) and of the hollow cylindrical case (13) is compressed isostatically.

8. A method of manufacture according to claim 7, characterized in that said distal tube elements (14, 140) are the first elements (14, 10, 11, 110, 100, 140, 111, 101) to be positioned in said cylindrical casing (13) during the step of filling said casing.

9. A method of manufacture according to claim 7 or 8, characterized in that it includes a finishing step consisting in removing material axially from the rotor or in giving the outside face of a rotor a particular shape.
